# EUROPEAN PATENT SPECIFICATION

(11) **EP 1 984 441 B1**
(45) Date of publication and mention of the grant of the patent: **15.08.2012**
(21) Application number: 07762984.8
(22) Date of filing: 26.01.2007
(51) Int. Cl.: C08K 5/42, C25D 13/02, C25D 13/06, C08L 67/03, C25D 13/12

(54) **COATING PROCESS FOR THERMOPLASTICS**
BESCHICHTUNGSVERFAHREN FÜR THERMOPLASTIK
PROCEDE DE REVETEMENT POUR THERMOPLASTIQUES

(30) Priority: 27.01.2006 US 762811 P
(43) Date of publication of application: 29.10.2008
(73) Proprietor: E.I. DU PONT DE NEMOURS AND COMPANY, Wilmington, DE 19898 (US)
(72) Inventor: ALMS, Gregory, R., Hockessin, DE 19707 (US); KOBAYASHI, Toshikazu, Chadds Ford, PA 19317 (US); RAO, Nandakumar, S., Hockessin, DE 19707 (US); RENKEN, Andreas, CH-1202 Geneva (CH)
(74) Representative: Morf, Jan Stefan
(86) International application number: PCT/US2007/002174
(87) International publication number: WO 2007/089585

(56) References cited:
- DE-A1- 19 943 637
- US-A- 4 806 571
- US-A- 5 744 554
- US-A1- 2003 031 844
- US-A1- 2005 148 710

## Description

### SUMMARY OF THE INVENTION

Compositions containing thermoplastic polymers and certain salts of fluorinated sulfonic acids adhere better to applied coatings (paints) than similar compositions not containing these salts.

### BACKGROUND OF THE INVENTION

Thermoplastics, such as polyolefins, polyamides, polyesters and many others are ubiquitous in modern life. They have a myriad of uses, and in some of these uses it is desirable, often for aesthetic reasons, for the thermoplastic to have a pleasing surface appearance and/or a certain color. While the latter may be accomplished by coloring the thermoplastic composition itself, in many instances it may be more desirable to paint the thermoplastic with a coating. Coated items often have a better appearance than just the uncoated thermoplastic item. In addition if the thermoplastic item is part of a larger assembly that includes metal, the metal will often be coated (painted) for aesthetic and/or anticorrosion purposes and if the metal and thermoplastic parts are both coated with the same coating, they will have an often desirable uniform appearance.

One problem in coating thermoplastic surfaces has been adhesion of the coating (paint) to the thermoplastic composition. Since most paints are (after deposition and curing) organic polymers (with additives), it is not surprising that adhesion is such a problem, because almost all combinations of organic polymers are incompatible with one another. To solve this problem coating manufacturers often add to coatings meant to coat thermoplastics various types of adhesion promoters, and/or recommend using a primer which is meant to improve adhesion is applied directly to the uncoated thermoplastic composition surface. However these methods add cost to the finished product and/or may cause other problems, so thermoplastic compositions with improved adhesion to paints are desired.

The use of certain fluorinated sulfonic acid salts in thermoplastic compositions has been disclosed, see for instance US Patent 6,194,497 and

European Patent 1,210,388. US 2005/0148710 A1 discloses an optionally coated article formed from a thermoplastic composition comprising a sulfonic acid phosphonium salt, preferably a fluorinated phosphonium sulfonate, as an antistatic agent. Neither of these documents mentions the use of such compositions for painting.

### SUMMARY OF THE INVENTION

This invention concerns, a process for the coating of a thermoplastic composition by applying a coating comprising an organic polymer to the surface of said thermoplastic composition, wherein the improvement comprises said thermoplastic composition comprising 0.01 to 3.0 weight percent, based on the total amount of thermoplastic in said thermoplastic composition, of a compound of the formula Z⁺R²SO₃]⁻ [I] wherein Z is a monocation, and R² is a fluoro substituted alkyl containing 1 to 16 carbon atoms, and contains no other groups than hydrogen and fluorine.

Also disclosed herein is the product of this process, i.e., the thermoplastic composition in which at least part of its surface is coated.

### DETAILS OF THE INVENTION

Herein certain terms are used and some of them are defined below:
A "hydrocarbyl group" is a univalent group containing only carbon and hydrogen. As examples of hydrocarbyls may be mentioned unsubstituted alkyls, cycloalkyls and aryls. If not otherwise stated, it is preferred that hydrocarbyl groups (and alkyl groups) herein contain 1 to 30 carbon atoms.

By "substituted hydrocarbyl" herein is meant a hydrocarbyl group that contains one or more substituent groups which are inert under the process conditions to which the compound containing these groups is subjected (e.g., an inert functional group, see below). The substituent groups also do not substantially detrimentally interfere with processes described herein. If not otherwise stated, it is preferred that substituted hydrocarbyl groups herein contain 1 to about 30 carbon atoms. Included in the meaning of "substituted" are rings containing one or more heteroatoms, such as nitrogen, oxygen and/or sulfur, and the free valence of the substituted hydrocarbyl may be to the heteroatom. In a substituted hydrocarbyl, all of the hydrogens may be substituted, as in trichloromethyl.

By "(inert) functional group" herein is meant a group, other than hydrocarbyl or substituted hydrocarbyl, which is inert under the process conditions to which the compound containing the group is subjected. The functional groups also do not substantially deleteriously interfere with any process described herein that the compound in which they are present may take part in. Examples of functional groups include halo [fluoro (whether in the sense of specifically fluoro substituted or just another functional group), chloro, bromo and iodo], and ether such as -OR⁵⁰ wherein R⁵⁰ is hydrocarbyl or substituted hydrocarbyl.

By "a coating comprising an organic polymer" is meant a coating composition that contains an organic polymeric material or components of the coating composition form an organic polymer during or after the application of the coating to the (thermoplastic composition) substrate. For example some oil paints contain linseed and/or similar oils that after application and upon subsequent exposure to air form a crosslinked polymeric network. Another such example is a coating which contains acrylic monomers and/or oligomers which crosslink upon exposure to heat and/or oxygen. Such materials are included in this definition.

By a "monocation" is meant a cation with one positive charge.

In compound [I] R² is fluoro-substituted alkyl containing 1 to 16 carbon atoms, and especially preferably is fluoro-substituted n-alkyl containing 1 to 10 carbon atoms. In R² no other groups besides fluorine and hydrogen are present. In another preferred form there are at least as many fluorine atoms present as hydrogen atoms in R², and in another preferred form R² is a perfluorinated. It is to be understood that any preferred forms present in [I] may be combined with any other preferred forms, so long as one of these preferred forms does not logically exclude the other.

In [I] Z is a monocation, which may organic or inorganic. If it is inorganic it is preferably an alkali metal cation, more preferably sodium or potassium, and especially preferably potassium. If it is an organic cation it is preferably an onium (cat)ion, such as sulfonium, ammonium, and phosphonium, and phosphonium is a preferred cation. Such cations may have the formula [R¹₄P]⁺, [R¹₄N]⁺, and [R¹₃S]⁺, wherein each R¹ is independently hydrocarbyl or substituted hydrocarbyl. Preferably, especially when Z is a phosphonium ion, each R¹ is alkyl containing 1 to 12 carbon atoms, more preferably 1 to 6 carbon atoms, and especially preferably is n-alkyl containing 1 to 6 carbon atoms. When Z is an onium ion, especially a phosphonium ion, it is particularly effective in assisting in electrostatically assisted painting operations.

In the thermoplastic composition 0.010 to 3.0 weight percent [based on the total weight of thermoplastic(s) present] of [I] is present Preferred minimum amounts are 0.020 weight percent, 0.10 weight percent and 0.30 weight percent, while preferred maximum amounts are 2.0 weight percent and 1.0 weight percent. It is to be understood that any maximum amount (including 3.0 weight percent) may be combined with any minimum amount (including 0.01 weight percent.

Any thermoplastic may be used in the composition. Useful thermoplastics include: poly(oxymethylene) and its copolymers; polyesters such as PET, poly(1,4-butylene terephthalate), poly(1,4-cyclohexyldimethylene terephthalate), and poly(1,3-poropyleneterephthalate); polyamides such as nylon-6,6, nylon-6, pylon-12, nylon-11, and aromatic-aliphatic copolyamides; polyolefins such as polyethylene (i.e. all forms such as low density, linear low density, high density, etc.), polypropylene, polystyrene, polystyrene/poly(phenylene oxide) blends, polycarbonates such as poly(bisphenol-A carbonate); partially fluorinated polymers such as copolymers of tetrafluoroethylene and hexafluoropropylene, poly(vinyl fluoride), and the copolymers of ethylene and vinylidene fluoride or vinyl fluoride; polysulfides such as poly(p-phenylene sulfide); polyetherketones such as poly(ether-ketones), poly(ether-ether ketones), and poly(ether-ketone-ketones); poly(etherimides); acrytonitrile-1,3-butadinene-styrene copolymers; thermoplastic (meth)acrylic polymers such as poly(methyl methacrylate); thermoplastic elastomers such as the "block" copolyester from terephthalate, 1,4-butanediol and poly(tetramethyleneether)glycol, and a block polyolefin containing styrene and (hydrogenated) 1,3-butadiene blocks; and chlorinated polymers such as poly(vinyl chloride), vinyl chloride copolymer, and poly(vinylidene chloride). Polymers which may be formed in situ, such as (meth)acrylate ester polymers are also included. Blends of 2 or more polymer and/or types of polymers may also be used.

Preferred thermoplastics are polyesters. Polyesters (in which at least 70 mole percent of the linking groups are ester linking groups) are normally derived from one or more dicarboxylic acids and one or more diols. In one preferred type of polyester the dicarboxylic acids comprise one or more of terephthalic acid, isophthalic acid and 2,6-naphthalene dicarboxylic acid, and the diol component comprises one or more of HO(CH₂)ₙOH (I), 1,4-cyclohexanedimethanol, HO(CH₂CH₂O)ₘCH₂CH₂OH (II), and HO(CH₂CH₂CH₂CH₂O)₂CH₂CH₂CH₂CH₂OH (III), wherein n is an integer of 2 to 10, m on average is 1 to 4, and is z an average of 7 to 40. Note that (II) and (III) may be a mixture of compounds in which m and z, respectively may vary and hence since m and z are averages they do not have to be integers.

Other preferred types of polymers include polyamides as described above, and blend of polyamides with other types of polymers including poly(phenylene oxides), acrylonitrile-butadiene-styrene copolymers and poly(phenylene ethers).

Thermoset compositions similarly containing [I] are also useful in coating or painting processes as described herein. Useful thermosets in epoxies, sheet molding compounds, melamine resins, and phenolic resins.

In addition to [I] the thermoplastic composition may contain various other materials that are normally added to such compositions, for example, fillers, reinforcing agents, antioxidants, pigments dyes, flame retardants, lubricants, electrically conductive fillers such as carbon black, crystallization accelerators, etc., in the amounts that are normally used in such compositions.

The coating of the thermoplastic composition surfaces may be carried out in any conventional manner, for example used in similar circumstances but where [I] is not present in the thermoplastic. Useful coating application processes include brushing, dipping, powder coating (especially electrostatically assisted), and spraying. In spraying and dipping (including dipping in fluidized baths of particulate coating which may be subsequently "melted" or "cured" by applying heat) it is preferred if the deposition of the coating is electranstatically assisted. Preferred types of application process are spraying and dipping in a fluidized bed, and these processes when electrostatically assisted are particularly preferred. In electrostatically assisted processes the presence of [I] may have the added advantage of rendering the electrical resistance of the thermoplastic composition low enough so that it may be used directly in the electrostatically assisted process without the need for other electrically conductive fillers in the composition and/or not require that electrically conductive primers be applied before the electrostatically assisted process is carried out.

Particularly for an automotive vehicle body, the metal parts and the at least one thermoplastic part optionally provided with a plastic primer are assembled in the conventional manner known to the person skilled in the art, for example by screwing, clipping and/or adhesion, to form the substrate to be coated by the third process according to the invention.

At least that (those) plastic part(s) of a substrate with the smallest possible joint width and in particular also in the same plane as the adjacent metal parts is (are) assembled with the metal parts.

Optionally, unassembled plastic parts, if any, which in general may differ in composition from the at least one of the thermoplastic parts and which in general are less resistant to heat deformation can be fitted on after completion of step (1) of the process according to the invention and can also be subjected to the further coating process of step (2) (compare the in-line process described above) and/or be fitted on after completion of the process according to the invention in finished coated form (compare the off-line process described above).

In view of the application of at least one further coating layer, taking place in step (2) of the third process according to the invention, preferably by electrostatically-assisted spray coating, it is expedient if the metal and plastic part(s) are assembled such that that they are not electrically insulated from one another; for example a direct electric contact between the electrically conductive thermoplastic and metal can be ensured by direct contact or via electrically conductive connecting elements, for example metal screws.

To produce an anti-corrosive primer layer on the metal parts, the substrates assembled from metal parts and at least one thermoplastic part (especially the first composition) in step (1) of the third process according to the invention are coated in an electrodeposition coating bath in the conventional manner known to the person skilled in the art. Suitable electrodeposition coating agents include conventional waterborne coating compositions with a solids content from, for example, 10 to 30 wt.%. Preferably the resistivity of the thermoplastic part(s) in the first step of the third process is not so low that the electrodeposition coating also coats the thermoplastic. In other words it is preferred that in an assembly containing both thermoplastic and metal parts only the metal parts are coated in the first step of the third process.

The electrodeposition coating compositions may be conventional anodic electrodeposition coating agents known to the skilled person. The binder basis of the anodic electrodeposition coating compositions may be chosen at will. Examples of anodic electrodeposition binders are polyesters, epoxy resin esters, (meth)acrylic copolymer resins, maleinate oils or polybutadiene oils with a weight average molecular mass (Mw) of, for example, 300-10 000 and a carboxyl group content, for example, corresponding to an acid value of 35 to 300 mg KOH/g. At least a part of the carboxyl groups is converted to carboxylate groups by neutralization with bases. These binders may be self cross-linking or cross-linked with separate cross-linking agents.

Preferably conventional cathodic electrodeposition coating agents known to the skilled person are used in the process according to the invention for the application of the electrodeposition coating layer. Cathodic electrodeposition coating compositions contain binders with cationic groups or groups which can be converted to cationic groups, for example, basic groups. Examples include amino, ammonium, e.g., quaternary ammonium, phosphonium and/or sulfonium groups. Nitrogen-containing basic groups are preferred; said groups may be present in the quaternized form or they are converted to cationic groups with a conventional neutralizing agent, e.g., an organic monocarboxylic acid such as, e.g., formic acid, lactic acid, methane sulfonic acid or acetic acid. Examples of basic resins are those with primary, secondary and/or tertiary amino groups corresponding to an amine value from, for example, 20 to 200 mg KOH/g. The weight average molecular mass (Mw) of the binders is preferably 300 to 10,000. Examples of such binders are amino(meth)acrylic resins, aminoepoxy resins, aminoepoxy resins with terminal double bonds, aminoepoxy resins with primary OH groups, aminopolyurethane resins, amino group-containing polybutadiene resins or modified epoxy resin-carbon dioxide-amine reaction products. These binders may be self-cross-linking or they may be used with known cross-linking agents in the mixture. Examples of such cross-linking agents include aminoplastic resins, blocked polyisocyanates, cross-linking agents with terminal double bonds, polyepoxy compounds or cross-linking agents containing groups capable of transesterification.

Apart from binders and any separate cross-linking agents, the electrodeposition coating compositions may contain pigments, fillers and/or conventional coating additives. Examples of suitable pigments include conventional inorganic and/or organic colored pigments and/or fillers, such as carbon black, titanium dioxide, iron oxide pigments, phthalocyanine pigments, quinacridone pigments, kaolin, talc or silicon dioxide. Examples of additives include, in particular, wetting agents, neutralizing agents, leveling agents, catalysts, corrosion inhibitors, anti-cratering agents, anti-foaming agents, solvents.

Electrodeposition coating can take place in a conventional manner known to the skilled person, for example, at deposition voltages from 200 to 500 V. After deposition of the electrodeposition coating, the substrate is cleaned from excess and adhering but non-deposited electrodeposition coating in a conventional manner known to the skilled person, for example, by rinsing with water. Thereafter the substrate is baked at oven temperatures of, for example, up to 220°C according to object temperatures of, for example, up to 200°C in order to crosslink the electrodeposition coating.

In the subsequent step (2) of the process according to the invention, at least one further coating layer is applied, preferably by spray application, in particular electrostatically-assisted spray application, at least to all the visible metal and plastic surfaces on the substrates thus obtained and only provided with a baked electrodeposition coating layer on the metal surfaces.

If only one further coating layer is applied, this is generally a pigmented top coat. However, it is preferred to apply more than one further coating layer. Examples of conventional multicoat constructions formed from a plurality of coating layers are:
- primer surface/top coat.
- primer surfacer/base coat/clear coat,
- base coat/clear coat,
- primer surfacer substitute layer/base coat/clear coat.

Primer surfacers or primer surfacer substitute coatings are mainly used for stone-chip protection and surface leveling and prepare the surface for the subsequent decorative top coat which provides protection against environmental influences and is made of pigmented top coat or of color- and/or effect-producing base coat and protective clear coat.

The multicoat constructions mentioned by way of example may also be provided over the entire surface or part of the surface with a transparent sealing coat, in particular providing high scratch-resistance.

All these coating layers following the electrodeposition coating layer may be applied from conventional coating agents well known to the person skilled in the art for applying the relevant coating layer. This can be a respective liquid coating agent containing, for example, water and/or organic solvents as diluents or a powder coating agent. The coating agents may be a single-component or multi-component coating agent; they may be physically drying or by oxidation or be chemically crosslinkable. In particular, primer surfacers, top coats, clear coats and sealing coats these are generally chemically cross-linking systems which can be cured thermally (by convection and/or by infrared irradiation) and/or by the action of energy-rich radiation, in particular ultraviolet radiation. It is preferred that one or more (preferably all the) coating layers formed after the electrodeposition coating layer is applied are applied using an electrostatically assisted coating process.

If more than one coating layer is applied in step (2) of the process according to the invention, the coating layers do not basically have to be cured separately prior to application of the respective subsequent coating layer. Rather, the coating layer can be applied according to the wet-on-wet principle known to the person skilled in the art, wherein at least two coating layers are cured together. In particular, for example, in the case of base coat and clear coat, following the application of the base coat, optionally followed by a short flash-off phase, the clear coat is applied and cured together with the base coat.

As noted above the coating may be a liquid and so brushed or sprayed on, or it may be a powder and for example used in a electrostatically assisted fluidized bed coating process or a spray powder coating process. If a liquid the coating may be based on organic liquid carriers, or may be water borne for example an emulsion or dispersion coating. Any of these types of coating may be used as primers, intermediate coats or final (finish) coats, the latter being the last coat to be applied. These coatings may also be so-called clear coats (usually a finish coating) or base coats a coating having a color which is often overcoated with a clear coat. Coating of any composition or type (liquid or solid, solvent or water borne) may be used for any of the uses (primer, clear coat, base coat, etc.) noted above.

The present composition is especially useful in automotive vehicles where at least part of the surfaces to be coated comprise thermoplastics. In automotive vehicle body building, metal parts are increasingly being replaced by plastic parts; examples include fenders, hoods, doors, lift-up tailgates, trunk lids, tank caps, bumpers, protective moldings, side panels, body sills, mirror housings, handles, spoilers and hub caps. From the external appearance, for example with respect to color tone, gloss and/or short-wave and long-wave structure, the surfaces of the coated plastic parts for the observer should not visually differ from the coated metal surfaces of a car body. This applies, in particular, to plastic parts which are constructed with as small a joint width as possible to and in particular also in the same plane as adjacent metal parts, since visual differences are particularly striking there.

There are three different approaches to the production of coated car bodies assembled from metal and plastic parts in a mixed construction:

1. The method known as the off-line process, in which the metal car body and the plastic parts are coated separately and then assembled.

The drawback of the off-line process is its susceptibility to lack of visual harmonization of the coated metal and plastic surfaces, at least in cases where coated plastic parts and coated metal parts are subjected to direct visual comparison for reasons of construction, for example, owing to the virtually seamless proximity of the coated parts and/or arrangement of the coated parts in one plane. A further drawback is the necessity of operating two coating processes.

2. The method known as the in-line process in which the metal body already provided with an electrodeposition coating and the uncoated plastic parts or the plastic parts optionally only provided with a plastic primer are assembled and provided with one or more further coating layers in a subsequent common coating process.

The drawback of the in-line process is the assembly step inserted into the coating process as an interruptive intermediate step which also involves the risk of introducing dirt into the further coating process.

3. The method known as the on-line process, in which the uncoated body parts made of metal and the uncoated plastic parts or the plastic parts optionally only provided with a plastic primer are assembled into a body constructed in a mixed construction and then passed through a common coating process including electrodeposition coating, wherein preferably (and usually) only the electrically conductive metal parts are provided with an electrodeposition coating, while all the coating layers to be applied subsequently are applied both to the electrodeposition coated metal parts and to the plastic parts.

The on-line process is particularly preferred as it clearly separates the body base shell construction and the coating process and allows an undisturbed coating sequence. Basically only adequately heat-resistant and simultaneously heat deformation-resistant plastics materials are suitable for the particularly preferred on-line process, since high temperatures are used in the drying of the electrodeposition coating. Plastic parts made of previously available fiber-reinforced thermoplastics, for example, are at best conditionally suitable, since the coated surfaces do not have an adequate high visual harmonization with the coated metal surfaces and, in particular, are not up to the high standards required by car manufacturers.

In addition for some painting processes such as electrostatically aided painting processes, it is desired that the part to be painted be more electrically conductive than typical thermoplastic compositions. In some instances the part may be coated with an electrically conductive primer, but this is an extra step in manufacture. It is known that adding sufficient amounts of electrically conductive fillers to some thermoplastic compositions renders these compositions more electrically conductive (less electrically resistant), although the increase in conductivity depends on the type and amount of electrically conductive filler used, the actual makeup of the thermoplastic composition, and the degree of dispersion of the electrically conductive filler in the thermoplastic composition. Many electrically conductive fillers are also known to deleteriously affect other properties of the thermoplastic composition, such as toughness and surface qualities, so these must also be taken into account when making such compositions.

The thermoplastic composition containing [I] may be used in all of the above mentioned automotive vehicle coating processes. Compositions for automotive bodies in which [I] may be used include those described in U.S. Patent Application No. 11/063, 189*(AD6998) and* 10/943,827 *(AD7043),* all of which are hereby included by reference. The presence of [I] in the thermoplastic composition unexpectedly often leads to improved paint adhesion. The composition containing [I] may also be used in analogous coating processes, for example the coating of appliance bodies or cases.

### TEST METHODS

Compounding and Molding Methods "Side fed" means those ingredients were mixed and fed in the side of the extruder, while "rear fed" means those ingredients were mixed and fed into the rear of the extruder. The mixing of the ingredients was usually by tumble mixing.

Compounding Method A Polymeric compositions were prepared by compounding in 40 mm Berstorf twin screw extruder. All ingredients were blended together and added to the rear (barrel 1) of the extruder except that Nyglos® and other minerals (including carbon black) were side-fed into barrel 4 (of 8 barrels) and the plasticizer was added using a liquid injection pump. Any exceptions to this method are noted in the examples. Barrel temperatures were set at 280-310°C resulting in melt temperatures 290-350°C depending on the composition and extruder rate and rpm of the screw.

Compounding Method B This was the same as Method A except a 30 mm Wemer and Pfleiderer twin screw extruder was used. The side-fed materials were fed into barrel 5 (of 10 barrels). The fluorinated sulfonic acid salts were side-fed into barrel 6.

Resins were molded into 130x130x3mm test specimens on a 450 ton injection molding machine. Barrel temperature were 300-310°C, melt temperatures were 300-305°C, mold temperatures were 120-130°C.

In the Examples certain ingredients are used, and they are defined below:
Bu₄P-HFPS - Tetrabutylphosphonium hexafluoropropylsulfonate - P(CH₂CH₂CH₂CH₃)₄⁺ CF₃CHFCF₂SO₃⁻.
Bu₄P-PFBuS - Tetrabutylphosphonium perfluorobutylsulfonate, P(CH₂CH₂CH₂CH₃)₄⁺ C₄F₉SO₃⁻.
CB1 - Ketjenblack® EC600JD, a conductive carbon black from Akzo Nobel Polymer Chemicals, LLC, Chicago, IL 60607 USA
Crystar® 3934 - PET homopolymer, IV = 0.67, available from E. I. DuPont de Nemours & Co., Inc., Wilmington, DE 19898 USA
Forafac® 1176 - K⁺C₆F₁₃C₂H₄SO₃⁻ available from E. I. DuPont de Nemours & Co., Inc., Wilmington, DE 19898 USA.
Novapex GG500 - PET homopolymer, available from Mitsubishi Chemical Corp., Tokyo 108-0014 Japan.
Irganox® 1010 - antioxidant available from Ciba Specialty Chemicals, Tarrytown, NY 10591, USA.
K-HFPS - Potassium Hexafluoropropylsulfonate - K⁺F₃CHFCF₂SO₃⁻.
LCP5 - 50/50/70/30/320 (molar parts) hydroquinone/4,4'-biphenol/terephthalic acid/2,6-napthalene dicarboxylic acid/4-hydroxybenzoic acid copolymer, melting point 334°C.
Licowax® PE 520 - a polyethylene wax used as a mold lubricant available from Clariant Corp. Charlotte, NC 28205, USA. It is reported to have an acid value of 0 mg KOH/g wax.
Nyglos® 4 - average approximately 9 µm length wollastonite fibers with no sizing available from Nyco Minerals, Calgary, AB, Canada.
Plasthall® 809 - polyethylene glycol 400 di-2-ethylhexanoate.
Polymer D - ethylene/n-butyl acrylate/glycidyl methacrylate (66/22/12 wt. %) copolymer, melt index 8 g/10 min.
Vansil® HR 325 - wollastonite from R.T. Vanderbilt Co., Norwalk, CT 06850, USA.

In the Examples, all compositional amounts shown are parts by weight.

Painting Process Test pieces having dimensions 130x130x3 mm were cleaned using iso-propanol and baked for 30 minutes at 190°C to simulate typical e-coat baking temperatures. Subsequently, a waterborne primer surfacer (Titanium Silver Hydrofüller® 131-79039-00 from Hemmelrath Lackfabrik GmbH, Klingenberg, Germany) was electrostatically sprayed onto the surface using a Dürr Ecobell® atomizer (Dürr AG, Bietigheim, Germany) and the test pieces were dried horizontally at 80°C for 10 minutes and then 160°C for 20 minutes. The test pieces were let to cool down to room temperature and a waterborne base coat (Titansilber® FW60/911W from BASF AG, Ludwigshafen, Germany) was electrostatically applied on the primer surfacer layer using a Dürr Ecobell® atomizer. The base coat was dried at 80°C for 10 min and then cooled to room temperature. Then a solvent borne 2K clear coat (2K Clear 40496.0 from DuPont Performance Coatings GmbH Co. KG, Wuppertal, Germany) was applied using a Dürr Ecobell® atomizer and dried at 145°C for 20 min.

Paint Adhesion Tests. Paint adhesion was determined on test plaques 130x130x3mm painted as described above. The cross-cut test was done according to ISO Method 2409. A result of "0" indicates that no paint came off the surface during the test and that paint adhesion was excellent. Values of below "2" are satisfactory on a scale of 0 to 5. Stone chip paint adhesion was evaluated according to VDA Standard 621-427 (of the German Automakers Association); again a value of "0" indicates that no paint came off the surface of the sample. Satisfactory values are "2" or below on a scale from 0 to 10. The results are summarized in Table 1.

### Examples 1-9

Samples were mixed by method A except for Examples 8-9 which were mixed by method B. All materials were molded using the standard injection molding procedure. Results are give in Table 1.

**Table 1**

| | Example | A | 1 | 2 | 3 | 4 | 5 | 6 |
|---|---|---|---|---|---|---|---|---|
| | | | | | | | | |
| Rear Fed | | | | | | | | |
| | Crystal® 3934 | 71.5 | 71.0 | 71.4 | 71.3 | 71.0 | | |
| | Novapex® GG500 | | | | | | 74.0 | 65.7 |
| | LCP5 | 2.5 | 2.5 | 2.5 | 2.5 | 2.5 | 2.5 | 2.5 |
| | Polymer D | 15 | 15 | 15 | 15 | 15 | 11 | 12 |
| | Irganox® 1010 | 0.3 | 0.3 | 0.3 | 0.3 | 0.3 | 0.3 | 0.3 |
| | Licowax® PE 520 | | | | | | 0.5 | 1.0 |
| | K-HFPS | | | | 0.2 | | | |
| | Bu₄P-HFPS | | 0.5 | 0.2 | | | | |
| Side Fed | | | | | | | | |
| | CB1 | 2.5 | 2.5 | 2.5 | 2.5 | 2.5 | 2.5 | |
| | Nyglos® 4 | 5.2 | 5.2 | 5.2 | 5.2 | 5.2 | | |
| | Vansil® HR325 | | | | | | 3.0 | 15.0 |
| | K-HFPS | | | | | 0.5 | | |
| | Bu₄P-HFPS | | | | | | 0.2 | |
| | Forafac® 1176 | | | | | | | 0.5 |
| Injected | | | | | | | | |
| | Plasthall® 809 | 3.0 | 3.0 | 3.0 | 3.0 | 3.0 | 3.0 | 3.0 |
| | | | | | | | | |
| Paint adhesion - Cross-Cut | | 5 | 1 | 1 | 0 | 0 | 0 | 0 |
| Paint adhesion - Stone-chip | | 6 | | | 0.5 | | 1 | 2 |

## Claims

1. A process for the coating of a thermoplastic composition by applying a coating comprising an organic polymer to the surface of said thermoplastic composition, wherein the improvement comprises, said thermoplastic composition comprises 0.01 to 3.0 weight percent, based on the total amount of thermoplastic in said thermoplastic composition, of a compound of the formula Z⁺[R²SO₃]⁻ [I] wherein Z is a monocation, and R² is fluorosubstituted alkyl containing 1 to 16 carbon atoms, and contains no other groups than hydrogen and fluorine , wherein said coating is applied using an electrodeposition process.

2. The process as recited in claim 1 wherein Z is an alkali metal cation or an organic onium cation.

3. The process as recited in any one of the preceding claims wherein said thermoplastic composition comprises part of an automotive vehicle or an automotive body.

4. A thermoplastic composition at least part of whose surface is coated, wherein said thermoplastic composition comprises 0.01 to 3.0 weight percent, based on the total amount of thermoplastic in said thermoplastic composition, of a compound of the formula Z⁺[R²SO₃]⁻ [I] wherein Z is a monocation, and R² is fluorosubstituted alkyl containing 1 to 16 carbon atoms, and contains no other groups than hydrogen and fluorine wherein said thermoplastic composition comprises part of an automotive vehicle or an automotive body .

5. The thermoplastic composition as recited in claim 4 wherein Z is an alkali metal cation or an organic onium cation.

## Patentansprüche

1. Verfahren zum Beschichten einer thermoplastischen Zusammensetzung durch Aufbringen einer Beschichtung, die ein organisches Polymer umfasst, auf die Oberfläche der thermoplastischen Zusammensetzung, wobei die Verbesserung die thermoplastische Zusammensetzung umfasst, die 0,01 bis 3,0 Gewichtsprozent, auf die Gesamtmenge von Thermoplast in der thermoplastischen Zusammensetzung bezogen, einer Verbindung der Formel Z⁺[R²SO₃]⁻ [I] umfasst , wobei Z ein Monokation ist und R² fluorsubstituiertes Alkyl ist, das 1 bis 16 Kohlenstoffatome enthält, und keine anderen Gruppen als Wasserstoff und Fluor enthält,
wobei die Beschichtung unter Anwendung eines elektrophoretischen Abscheidungsverfahrens aufgebracht wird.

2. Verfahren wie in Anspruch 1 aufgeführt, wobei Z ein Alkalimetallkation oder ein organisches Oniumkation ist.

3. Verfahren wie in einem der vorhergehenden Ansprüche aufgeführt, wobei die thermoplastische Zusammensetzung einen Teil eines Kraftfahrzeugs oder einer Karosserie umfasst.

4. Thermoplastische Zusammensetzung, deren Oberfläche mindestens zum Teil beschichtet ist, wobei die thermoplastische Zusammensetzung 0,01 bis 3,0 Gewichtsprozent, auf die Gesamtmenge des Thermoplasts in der thermoplastischen Zusammensetzung bezogen, einer Verbindung der Formel Z⁺[R²SO₃]⁻ (I) umfasst, wobei Z ein Monokation ist und R² fluorsubstituiertes Alkyl ist, das 1 bis 16 Kohlenstoffatome enthält, und keine anderen Gruppen als Wasserstoff und Fluor enthält, wobei die thermoplastische Zusammensetzung Teil eines Kraftfahrzeugs oder einer Karosserie umfasst.

5. Thermoplastischen Zusammensetzung wie in Anspruch 4 aufgeführt, wobei Z ein Alkalimetallkation oder ein organisches Oniumkation ist.

## Revendications

1. Procédé de revêtement d'une composition thermoplastique par l'application d'un revêtement comprenant un polymère organique à la surface de ladite composition thermoplastique, dans lequel l'amélioration comprend, ladite composition thermoplastique qui comprend 0,01 à 3,0 pourcents en poids, sur la base de la quantité totale du thermoplastique dans ladite composition thermoplastique, d'un composé de formule Z⁺[R²SI₃]⁻ [I] dans laquelle Z est un cation monovalent, et R² est un groupe alkyle substitué par un groupe fluoro contenant 1 à 16 atomes de carbone, et qui ne contient pas d'autres groupes que l'hydrogène et le fluor ;
dans lequel ledit revêtement est appliqué en utilisant un procédé d'électrodéposition.

2. Procédé tel qu'énoncé selon la revendication 1, dans lequel Z est un cation métallique alcalin ou un cation d'onium organique.

3. Procédé tel qu'énoncé selon l'une quelconque des revendications précédentes, dans lequel ladite composition thermoplastique comprend une pièce d'un véhicule automobile ou une carrosserie automobile.

4. Composition thermoplastique dont au moins une partie de la surface est revêtue, dans laquelle ladite composition thermoplastique comprend 0,01 à 3,0 pourcents en poids, sur la base de la quantité totale du thermoplastique dans ladite composition thermoplastique, d'un composé de formule Z⁺[R²SO₃]⁻ [I] dans laquelle Z est un cation monovalent, et R² est un groupe alkyle substitué par un groupe fluoro contenant 1 à 16 atomes de carbone, et qui ne contient pas d'autres groupes que l'hydrogène et le fluor ;
dans laquelle ladite composition thermoplastique comprend une pièce d'un véhicule automobile ou une carrosserie automobile.

5. Composition thermoplastique telle qu'énoncée selon la revendication 4, dans laquelle Z est un cation métallique alcalin ou un cation d'onium organique.
